# FASCICULE DE BREVET EUROPEEN

(11) **EP 2 143 927 B1**
(45) Date de publication et mention de la délivrance du brevet: **29.02.2012**
(21) Numéro de dépôt: 09164986.3
(22) Date de dépôt: 09.07.2009
(51) Int. Cl.: F02K 1/09, F02K 9/52, F02K 9/95, F02K 9/97, F02K 9/94, F02K 7/18, F02K 9/58

(54) **Moteur-fusée à propergol liquide avec obturateur de chambre propulsive**
Raketentriebwerk für Flüssigtreibstoff mit Verschlussblende zur Brennkammer
Liquid-propellant rocket engine with propulsion chamber blanking plug

(30) Priorité: 11.07.2008 FR 0854773
(43) Date de publication de la demande: 13.01.2010
(73) Titulaire: SNECMA, 75015 Paris (FR)
(72) Inventeur: Goislot, Hervé, 75002 Paris (FR)
(74) Mandataire: Thévenet, Jean-Bruno

(56) Documents cités:
- EP-A- 1 243 783
- DE-A1- 2 320 076
- US-A- 3 234 731
- US-A1- 2005 188 677

## Description

### Domaine de l'invention

La présente invention concerne un moteur-fusée à propergol liquide avec obturateur de chambre propulsive, comprenant une chambre de combustion, un dispositif d'injection de propergol disposé à une première extrémité amont de la chambre de combustion, un col de tuyère disposé à une deuxième extrémité aval de la chambre de combustion éloignée de ladite première extrémité amont et un divergent disposé en aval du col de tuyère.

### Art antérieur

On connaît déjà divers types de moteurs-fusées à propergol liquide comprenant un obturateur disposé en amont du col de la tuyère et un système de commande hydraulique ou fluide pour commander le déplacement de l'obturateur et son maintien en position ouverte lors du fonctionnement du moteur-fusée.

La nécessité d'insérer un obturateur en amont du col, associé à un système de commande, présente un certain nombre d'inconvénients. En particulier, cela implique un accroissement du volume de la chambre de combustion et la mise en oeuvre d'un guidage long dans la partie chambre (qui conduit lui-même à un rapport longueur/diamètre défavorable).

L'utilisation d'un système de commande avec blocage en position ouverte conduit à un accroissement de la masse et du coût de fabrication.

On connaît par ailleurs des moteurs-fusées comprenant un noyau central de déflexion disposé en aval du col de la tuyère. Ce noyau central axisymétrique présente toutefois une position fixe par rapport au col de tuyère et n'est pas prévu pour permettre une obturation de celui-ci.

Le document de brevet US 2870 599 décrit une tuyère de moteur-fusée à propergol liquide avec une ogive qui est déplaçable axialement à l'aide d'une tige. Toutefois, l'ogive constitue un simple organe de régulation et ne peur pas réaliser d'obturation complète du col de tuyère.

On connaît par le document DE 2320076 A1 un moteur-fusée comprenant une tige mobile munie d'un obturateur capable d'obturer le col de la tuyère du moteur-fusée.

Le document US 3234731 A décrit un dispositif de régulation de la poussée d'un moteur-fusée à ergols liquides comprenant une tête mobile axialement et située au niveau du col de tuyère du moteur-fusée.

Le document US 2005/0188677 A1 décrit également un dispositif de régulation de la poussée d'un moteur-fusée comprenant une tête mobile axialement et située au niveau du col de tuyère du moteur-fusée.

### Définition et objet de l'invention.

Certains ergols nécessitent que l'allumage s'effectue avec une pression supérieure à une valeur minimale dans la chambre de combustion. Dans ce cas, il est nécessaire d'obturer le col de la tuyère au moment de l'allumage.

L'invention vise notamment à permettre une telle obturation sans que la masse ou le coût du moteur-fusée soient accrus de façon rédhibitoire.

L'invention vise également à permettre d'effectuer de façon fiable plusieurs allumages successifs d'un même moteur-fusée.

Ces buts sont atteints conformément à l'invention grâce à un moteur-fusée à propergol liquide à obturateur, comprenant une chambre de combustion, un dispositif d'injection de propergol disposé à une première extrémité amont de la chambre de combustion, un col de tuyère disposé à une deuxième extrémité aval de la chambre de combustion éloignée de ladite première extrémité amont et un divergent disposé en aval du col de tuyère, ce moteur comprend un dispositif d'obturation sélective du col de tuyère pour définir au moins une position fermée dans laquelle le col de tuyère est obturé de façon complète et au moins une position ouverte dans laquelle une section, de passage prédéterminée est définie au niveau du col tuyère et caractérisé en ce que le dispositif d'obturation sélective comprend un organe d'obturation axisymétrique +placé en aval du col de tuyère, une tige axiale de commande de l'organe d'obturation, un premier organe de centrage court de la tige de commande situé à la première extrémité amont de la chambre de combustion au niveau du dispositif d'injection de propergol et présentant un diamètre D et une longueur axiale L de zone de contact un deuxième organe de centrage court de la tige de commande situé dans la chambre de combustion au voisinage du col de tuyère et en amont de celui-ci et présentant un diamètre D et une longueur axiale L de zone de contact et un système de rappel en position de fermeture de la tige de commande du dispositif d'obturation sélective du col de tuyère ladite longueur L de la zone de contact et ledit diamètre D étant liés par la relation 0,1 D ≤ L ≤ 0,5 D

La section de passage annulaire au niveau du col en position ouverte de l'organe d'obturation est équivalente à une section de col sans obturateur.

La montée en pression à l'intérieur de la chambre de combustion induit une ouverture naturelle de l'obturateur à une pression prédéterminée.

Le moteur-fusée selon l'invention présente l'avantage que l'organe d'obturation cherche toujours à s'ouvrir quand la pression monte. Il n'existe donc pas de risque de blocage et de montée excessive de la pression.

Par ailleurs, l'écoulement dans la chambre de combustion est peu perturbé.

Enfin, il est possible d'obtenir un gain important en masse et en coût du fait que, selon un mode de réalisation préférentiel, l'ouverture et la fermeture du col de la tuyère à l'aide de l'organe d'obturation axisymétrique amovible peuvent s'effectuer automatiquement sans système de commande.

Selon un mode de réalisation particulier, le deuxième organe de centrage court comprend un croisillon mobile solidaire de la tige de commande.

Selon un autre mode de réalisation particulier, le deuxième organe de centrage court comprend un croisillon fixe solidaire de la chambre de combustion et muni d'un trou central dans lequel la tige de commande est montée coulissante.

Le système de rappel en position de fermeture de la tige de commande peut comprendre un ressort taré.

Dans ce cas, la montée en pression dans la chambre de combustion induit une ouverture naturelle de l'organe d'obturation à une pression correspondant à l'effort de tarage du ressort taré, qui est avantageusement disposé à l'extérieur de la chambre de combustion, au niveau du dispositif d'injection de propergol.

Selon un mode de réalisation préférentiel, le premier organe de centrage court de la tige de commande comprend un manchon intégré dans le dispositif d'injection de propergol.

Selon une variante de réalisation, le moteur-fusée comprend un dispositif de commande hydraulique actionné par le propergol et agissant sur une extrémité amont de la tige de commande pour bloquer en position ouverte le dispositif d'obturation sélective du col de tuyère.

Avantageusement, le moteur-fusée comprend un dispositif d'injection de propergol de type annulaire.

Dans une version automatique sans système de commande, l'organe d'obturation axisymétrique doit présenter une forme de dard ou d'ogive avec une longueur suffisante pour que l'effet résultant d'ouverture soit stable compte tenu du différentiel de pression statique des gaz entre l'amont et l'aval de la tuyère.

De préférence, l'organe d'obturation axisymétrique est en matériau composite.

La chambre de combustion est avantageusement en matériau composite.

Selon une caractéristique particulière, la chambre de combustion comprend un revêtement intérieur de protection disposé entre la première extrémité amont de la chambre de combustion et la zone où se trouve situé le deuxième organe de centrage court de la tige de commande.

Selon l'invention, la tige de commande du dispositif d'obturation sélective du col de tuyère entraîne automatiquement l'ouverture du dispositif d'obturation sélective lorsque la pression dans la chambre de combustion dépasse une valeur prédéterminée.

Le moteur-fusée selon l'invention peut être appliqué à tout système propulsif à poussée modulable et réallumable nécessitant une pression chambre minimale à l'allumage, l'organe d'obturation étant placé en position d'obturation du col de tuyère en phase de réallumage. Des applications sont envisageables pour un obturateur de gaz chauds résultant d'une combustion d'ergols liquides, mais aussi dans le cadre d'une propulsion dont les ergols sont solides (poudres, hybrides...).

### Brève description des dessins

D'autres caractéristiques et avantages de la présente invention ressortiront mieux de la description suivante de modes particuliers de réalisation, faite à titre indicatif et non limitatif, en référence aux dessins annexés, sur lesquels :
- la Figure 1 est une vue schématique en coupe axiale d'un moteur-fusée selon un mode particulier de réalisation de l'invention ;
- la Figure 2 est une vue schématique en coupe axiale montrant une partie du moteur-fusée de la Figure 1, avec le dispositif d'injection d'ergol et une partie de l'organe de commande d'obturation du col de tuyère, selon un mode particulier de l'invention ;
- la Figure 3 est une vue en coupe selon le plan III-III de la Figure 1 ;
- la Figure 4 est une vue analogue à celle de la Figure 3 montrant une variante de réalisation d'une partie de l'organe de commande d'obturation du col de tuyère ; et
- la Figure 5 est une section selon le plan V-V de la Figure 4.

### Description détaillée de modes de réalisation préférentiels

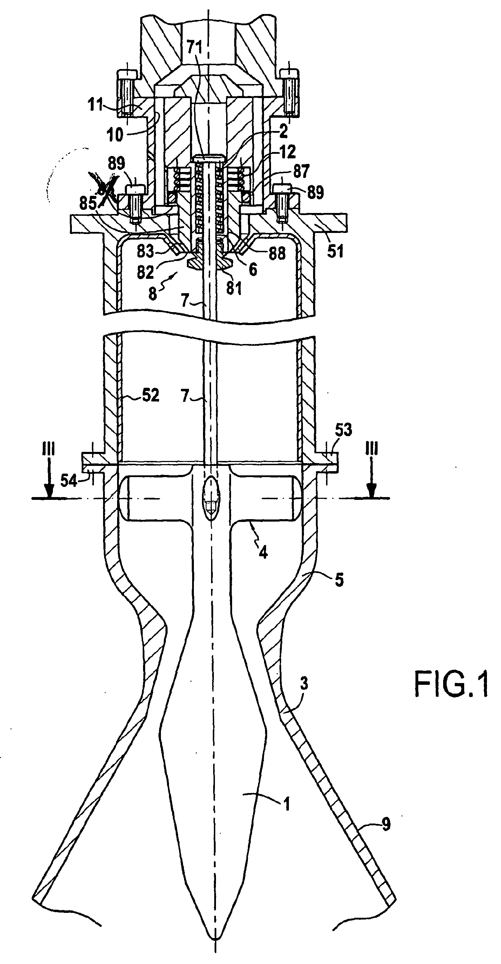

Si l'on se réfère à la Figure 1, on voit une représentation schématique en coupe longitudinale d'un exemple de moteur-fusée à propergol liquide à obturateur conforme à l'invention.

Le moteur-fusée comprend un corps 5 de révolution qui définit une tuyère avec une chambre de combustion comportant une plaque amont 51 servant de support à un dispositif 8 d'injection de propergol, un col de tuyère 3 pouvant être sélectivement obturé par un organe d'obturation axisymétrique 1, et un divergent 9 qui n'est représenté que partiellement sur la Figure 1 et est situé en aval du col de tuyère 3.

Le dispositif d'obturation sélective du col de tuyère 3 comprend un organe d'obturation axisymétrique 1 qui présente une forme de dard ou d'ogive, une tige 7 axiale de commande de l'organe d'obturation 1 et des organes 6, 4 de centrage court de la tige de commande 7.

Dans la présente description, de façon classique, on entend par organe de centrage court un organe définissant une zone de contact qui peut se modéliser comme une liaison sphère-cylindre.

Si la longueur de la zone de contact est L et si le diamètre de l'organe de centrage court est D, on a une relation du type L ≤ 0,8D.

De préférence, on peut choisir la valeur de la longueur L de la zone de contact dans la plage de valeurs suivantes : 01lD ≤ L ≤ 0,5D.

De façon encore plus préférentielle on peut choisir la valeur de la longueur L de la zone de contact dans la plage de valeurs suivantes : 0,1D ≤ L ≤ 0,3D.

Par ailleurs, également de façon classique, on entend par organe de centrage long un organe définissant une zone de contact qui peut se modéliser comme une liaison à pivot glissant.

Si la longueur de la zone de contact est L et si le diamètre de l'organe de centrage long est D, on a une relation du type D ≤ L.

De préférence, on peut choisir la valeur de la longueur L de la zone de contact dans la plage de valeurs suivantes : 1,5 D ≤ L.

L'organe d'obturation 1 est situé en aval du col de tuyère 3. Lors d'un allumage ou d'un réallumage du moteur-fusée, l'organe d'obturation 1 peut venir obturer complètement le col de tuyère 3. Lorsque la pression monte dans la chambre de combustion après l'allumage ou le ré-allumage, l'organe d'obturation 1 cherche toujours à s'ouvrir. Il n'existe donc pas de risque de blocage ou de montée excessive de la pression.

L'organe d'obturation 1 peut ainsi s'ouvrir sans système de commande lorsque la pression qui s'exerce sur l'organe d'obturation dépasse une valeur prédéterminée qui induit un effort transmis par la tige de commande 7 et l'extrémité amont 71 de celle-ci de manière à comprimer un ressort taré 2. L'organe d'obturation 1 en forme de dard ou d'ogive présente une longueur suffisante pour que l'effort d'ouverture soit stable compte tenu du différentiel de pression statique des gaz entre l'amont et l'aval de la tuyère.

Lorsque l'organe d'obturation 1 est ouvert de façon complète, la section annulaire de passage au niveau du col de tuyère 3 correspond à une section de col équivalente sans obturateur.

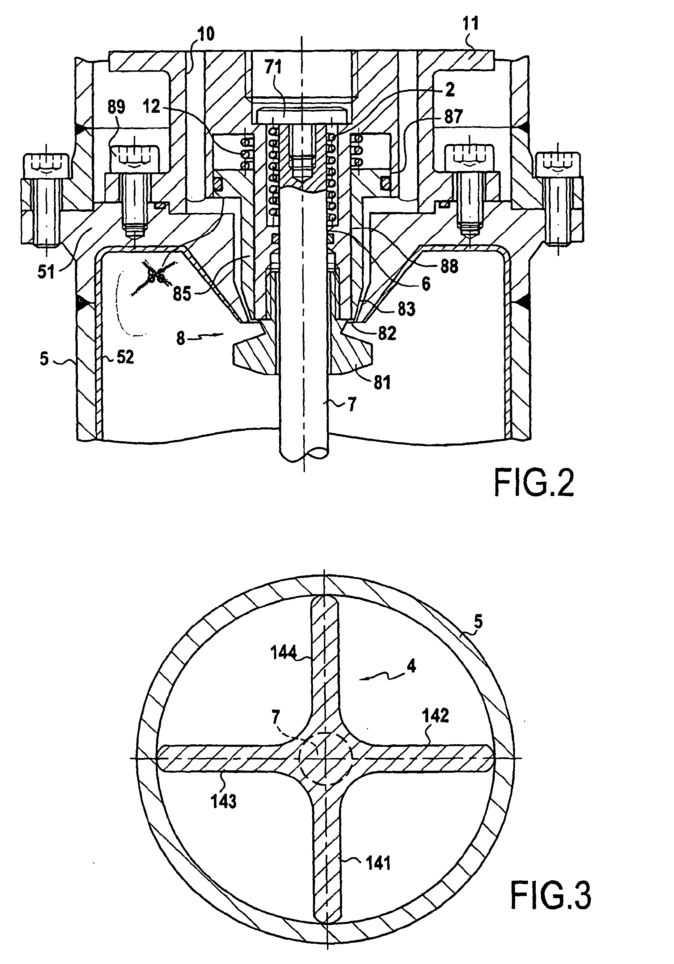

La tige de commande 7 est associée à un dispositif de centrage court 4 situé immédiatement en amont du col de tuyère 3. Ce dispositif de centrage court 4 peut comprendre un croisillon qui glisse le long de la paroi du corps 5 de la chambre de combustion et est relié à la tige de commande 7 de façon fixe. Comme représenté, sur la Figure 3, le croisillon peut comprendre quatre branches 141 à 144 en forme de croix.

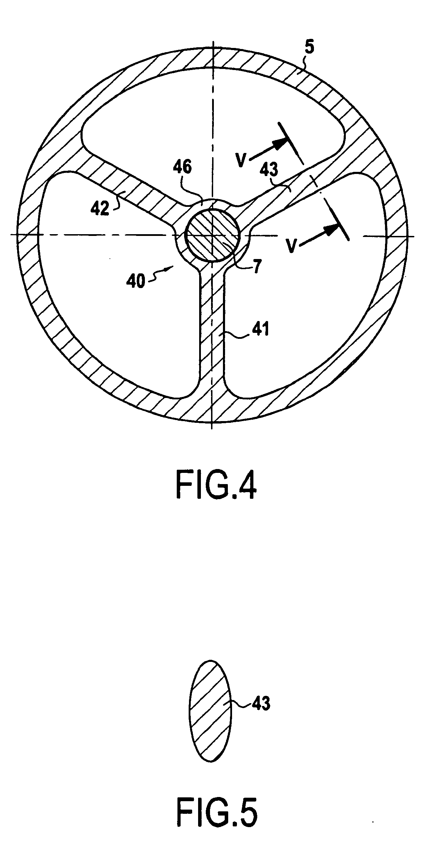

A titre de variante, comme représenté sur les Figures 4 et 5, le dispositif de centrage court 40 peut comprendre un croisillon fixe avec des branches 41 à 43 reliées de façon fixe à la paroi du corps de la chambre 5. Dans ce cas, le croisillon 40 comprend une ouverture centrale 46 de passage de la tige de commande 7 qui est ainsi guidée par le croisillon fixe 40. A titre d'exemple, le croisillon 40 peut comprendre trois branches 41 à 43 décalées entre elles de 120°.

Dans le mode de réalisation de la Figure 1 à croisillon mobile 4, comme dans celui de la Figure 4 à croisillon fixe 40, les branches du croisillon sont suffisamment minces pour ne pas perturber l'écoulement des gaz dans la chambre de combustion (voir Figure 5).

Un autre centrage court 6 est réalisé dans la tête d'injection 8 pour guider la tige de commande 7 en amont de la chambre de combustion et de sa plaque 51 de support de la tête d'injection 8.

La figure 1 est représentée de façon schématique et le diamètre de la tige 7 peut être plus important que ce qui est représenté sur les dessins.

Le corps 5 de la tuyère est avantageusement réalisé en matériau composite, comme l'organe d'obturation 1 en forme de dard, pour pouvoir résister aux fortes contraintes thermiques.

Le corps 5 de la tuyère peut comprendre une partie aval définissant le divergent 9, le col de tuyère 3 et la partie aval de la chambre de combustion dans laquelle est situé le dispositif de centrage court 4 ou 40. Dans ce cas, cette partie aval est reliée par une bride 54 à une bride 53 d'une partie amont du corps 5 de tuyère, cette partie amont comprenant la majeure partie de la chambre de combustion, y compris la plaque de fond 51 supportant la tête d'injection 8. Un revêtement intérieur de protection 52 peut être formé sur la partie amont du corps de tuyère 5.

La tête d'injection 8 peut être du type à injection annulaire avec un embout central 81 à l'intérieur duquel coulisse la tige de commande 7, et une section annulaire d'injection 82 constituant la section de sortie d'un canal 83 de mise en vitesse de l'ergol provenant de trous 10 d'alimentation formés dans un corps 11 rapporté sur la plaque de fond 51 et fixée à celle-ci par des éléments de liaison 89.

La Figure 2 montre un exemple de réalisation particulier de tête d'injection 8 rapportée sur une plaque de fond 51 d'un corps de tuyère 5.

Sur la Figure 2, on voit la tige centrale 7 de commande de l'organe d'obturation qui traverse l'embout central 81 de la tête d'injection 8 et coopère avec un dispositif de centrage court 6 et un ressort de tarage 2 disposé autour de la tige de commande 7 entre les portions fixes de la tête d'injection 8 définissant le dispositif de centrage court 6 et une plaque d'extrémité 71 fixée à l'extrémité amont de la tige de commande 7.

La tête d'injection 8 peut comprendre une pièce mobile annulaire 85 disposée autour d'une partie annulaire fixe qui sert de support pour l'embout 81 et comprend également le dispositif de centrage court 6 de la tige de commande 7.

La pièce mobile annulaire 85 dont l'extrémité aval est tronconique permet d'ajuster la valeur de la section annulaire 82 d'injection d'ergol. La pièce mobile annulaire 85 coopère avec un ressort 12 ou des rondelles Belleville interposées entre la pièce mobile annulaire 85 et le fond d'une cavité du corps 11 de la tête d'injection 8. La pièce mobile annulaire 85 coulisse coaxialement à la tige de commande 7 en étant guidée, par rapport au corps 11 de la tête d'injection 8, par un organe de centrage long aval 88 et par un dispositif de centrage court 87 d'étanchéité par rapport à la partie annulaire fixe définissant le dispositif de centrage court 6 de la tige de commande 7.

Naturellement, la tête d'injection 8 peut présenter des variantes de réalisation.

Par ailleurs, selon un mode de réalisation possible, l'extrémité amont 71 de la tige 7 de commande de l'organe d'obturation 1 peut être commandée de façon hydraulique avec l'ergol injecté par la tête d'injection 8, afin de bloquer le système en position ouverte après une phase d'allumage.

## Revendications

1. Moteur-fusée à propergol liquide avec obturateur de chambre propulsive, comprenant une chambre de combustion (5), un dispositif (8) d'injection de propergol disposé à une première extrémité amont (51) de la chambre de combustion (5), un col de tuyère (3) disposé à une deuxième extrémité aval de la chambre de combustion (5) éloignée de ladite première extrémité amont (51) et un divergent (9) disposé en aval du col de tuyère (3),
ce moteur comprend un dispositif d'obturation sélective du col de tuyère (3) pour définir au moins une position fermée dans laquelle le col de tuyère (3) est obturé de façon complète et au moins une position ouverte dans laquelle une section de passage prédéterminée est définie au niveau du col de la tuyère (3) et **caracterisé en ce que** le dispositif d'obturation sélective comprend un organe d'obturation axisymétrique (1) placé en aval du col de tuyère (3), une tige (7) axiale de commande de l'organe d'obturation (1), un premier organe de centrage court (6) de la tige de commande (7) situé à la première extrémité amont (51) de la chambre de combustion au niveau du dispositif (8) d'injection de propergol et présentant un diamètre D et une longueur axiale L de zone de contact, un deuxième organe de centrage court (4) de la tige de commande (7) situé dans la chambre de combustion (5) au voisinage du col de tuyère (3) et en amont de celui-ci et présentant un diamètre D et une longueur axiale L de zone de contact, et un système (2) de rappel en position de fermeture de la tige de commande (7) du dispositif d'obturation sélective du col de tuyère (3), ladite longueur L de la zone de contact et ledit diamètre D étant liés par la relation 0,1 D ≤ L ≤ 0,5 D.

2. Moteur-fusée selon la revendication 1, **caractérisée en ce que** ladite longueur de la zone de contact et ledit diamètre D sont liés par la relation 0,1 D ≤ L ≤ 0,3 D.

3. Moteur-fusée selon la revendication 1 ou la revendication 2, **caractérisé en ce que** le deuxième organe de centrage court (4) comprend un croisillon mobile (141 à 144) solidaire de la tige de commande (7).

4. Moteur-fusée selon la revendication 1 ou la revendication 2, **caractérisé en ce que** le deuxième organe de centrage court (4) comprend un croisillon fixe (40) solidaire de la chambre de combustion (5) et muni d'un trou central (46) dans lequel la tige de commande (7) est montée coulissante.

5. Moteur-fusée selon l'une quelconque des revendications 1 à 4, **caractérisé en ce qu'**il comprend un dispositif de commande hydraulique actionné par le propergol et agissant sur une extrémité amont (71) de la tige de commande (7) pour bloquer en position ouverte le dispositif d'obturation sélective du col de tuyère (3).

6. Moteur-fusée selon l'une quelconque des revendications 1 à 5, **caractérisé en ce que** le système (2) de rappel en position de fermeture de la tige de commande (7) comprend un ressort taré.

7. Moteur-fusée selon l'une quelconque des revendications 1 à 6, **caractérisé en ce que** le premier organe de centrage court (6) de la tige de commande (7) comprend un manchon intégré dans le dispositif (8) d'injection de propergol.

8. Moteur-fusée selon l'une quelconque des revendications 1 à 7, **caractérisé en ce qu'**il comprend un dispositif (8) d'injection de propergol de type annulaire.

9. Moteur-fusée selon l'une quelconque des revendications 1 à 8, **caractérisé en ce que** l'organe d'obturation axisymétrique (1) présente une forme de dard ou d'ogive.

10. Moteur-fusée selon l'une quelconque des revendications 1 à 9, **caractérisé en ce que** l'organe d'obturation axisymétrique (1) est en matériau composite.

11. Moteur-fusée selon l'une quelconque des revendications 1 à 10, **caractérisé en ce que** la chambre de combustion (5) est en matériau composite.

12. Moteur-fusée selon l'une quelconque des revendications 1 à 11, **caractérisé en ce que** la chambre de combustion (5) comprend un revêtement intérieur de protection (52) disposé entre la première extrémité amont (51) de la chambre de combustion (5) et la zone où se trouve situé le deuxième organe de centrage court (4) de la tige de commande (7).

13. Moteur-fusée selon l'une quelconque des revendications 1 à 12, **caractérisé en ce que** la tige de commande (7) du dispositif d'obturation sélective du col de tuyère (3) entraîne automatiquement l'ouverture du dispositif d'obturation sélective lorsque la pression dans la chambre de combustion (5) dépasse une valeur prédéterminée.

14. Moteur-fusée selon l'une quelconque des revendications 1 à 13, **caractérisé en ce qu'**il constitue un système propulsif à poussée modulable et réallumable nécessitant une pression chambre minimale à l'allumage et **en ce qu'**il comprend des moyens pour placer l'organe d'obturation (1) en position d'obturation du col de tuyère (3) en phase de réallumage.

## Claims

1. A liquid propellant rocket engine with a propulsion chamber shutter, the engine comprising a combustion chamber (5), a propellant injector device (8) disposed at an upstream first end (51) of the combustion chamber (5), a nozzle throat (3) disposed at a downstream second end of the combustion chamber (5) remote from the upstream first end (51), and a diverging portion (9) disposed downstream from the nozzle throat (3),
this engine includes a selective shutter device for the nozzle throat (3) to define at least a closed position in which the nozzle throat (3) is shut completely, and at least one open position in which a predetermined flow section is defined through the nozzle throat (3), and said engine is **characterized in that** the selective shutter device comprises an axially-symmetrical shutter member (1) placed downstream from the nozzle throat (3), an axial rod (7) for controlling the shutter member (1), a first short centering member (6) for the control rod (7) situated at an upstream first end (51) of the combustion chamber level with the propellant injector device (8), and having a diameter D and an axial length L of the contact zone, a second short centering member (4) for the control rod (7) situated in the combustion chamber (5) in the vicinity of the nozzle throat (3) and upstream therefrom, and having a diameter D and an axial length L of the contact zone, and a system (2) for returning the control rod (7) of the selective shutter device for the nozzle throat (3) to the closed position, said length L of the contact zone and said diameter D having the following relationship: 0.1 D ≤ L ≤ 0.5 D.

2. A rocket engine according to claim 1, **characterized in that** said length of the contact zone and said diameter D have the following relationship: 0.1 D ≤ L ≤ 0.3 D.

3. A rocket engine according to claim 1 or claim 2, **characterized in that** the second short centering member (4) comprises a movable spider (141 to 144) secured to the control rod (7).

4. A rocket engine according to claim 1 or claim 2, **characterized in that** the second short centering member (4) comprises a stationary spider (40) secured to the combustion chamber (5) and provided with a central hole (46) through which the control rod (7) is slidably mounted.

5. A rocket engine according to any one of claims 1 to 4, **characterized in that** it includes a hydraulic control device actuated by the propellant and acting on an upstream end (71) of the control rod (7) to hold the selective shutter device for the nozzle throat (3) in the open position.

6. A rocket engine according to any one of claims 1 to 5, **characterized in that** the system (2) for returning the control rod (7) to the closed position comprises a rated spring.

7. A rocket engine according to any one of claims 1 to 6, **characterized in that** the first short centering member (6) for the control rod (7) comprises a sleeve incorporated in the propellant injector device (8).

8. A rocket engine according to any one of claims 1 to 7, **characterized in that** it includes a propellant injector device (8) of annular type.

9. A rocket engine according to any one of claims 1 to 8, **characterized in that** the axially-symmetrical shutter member (1) is in the form of a spear-head or a nose-cone.

10. A rocket engine according to any one of claims 1 to 9, **characterized in that** the axial symmetrical shutter member (1) is made of composite material.

11. A rocket engine according to any one of claims 1 to 10, **characterized in that** the combustion chamber (5) is made of composite material.

12. A rocket engine according to any one of claims 1 to 11, **characterized in that** the combustion chamber (5) includes an internal protective coating (52) placed between the upstream first end (51) of the combustion chamber (5) and the zone where the second short centering member (4) for the control rod (7) is situated.

13. A rocket engine according to any one of claims 1 to 12, **characterized in that** the control rod (7) for the selective shutter device for the nozzle throat (3) automatically causes the selective shutter device to open when the pressure in the combustion chamber (5) exceeds a predetermined value.

14. A rocket engine according to any one of claims 1 to 13, **characterized in that** it consists of a propulsion system that delivers thrust that can be modulated and re-ignited, that requires a minimum chamber pressure on ignition, and **in that** it comprises means for placing the shutter member (1) in the nozzle throat (3) shutting position during a re-ignition stage.

## Patentansprüche

1. Flüssigkeitsraketentriebwerk mit Brennkammerabsperrorgan, umfassend eine Brennkammer (5), eine Vorrichtung (8) zum Einspritzen von Treibstoff, die an einem stromaufwärtigen ersten Ende (51) der Brennkammer (5) angeordnet ist, einen Düsenhals (3), der an einem stromabwärtigen zweiten Ende der Brennkammer (5), das von dem stromaufwärtigen ersten Ende (51) entfernt ist, angeordnet ist, und ein divergentes Düsenteil (9), das stromabwärts des Düsenhalses (3) angeordnet ist,
dieses Triebwerk umfaßt eine Vorrichtung zum selektive Verschließen des Düsenhalses (3), um wenigstens eine geschlossene Position zu definieren, in der der Düsenhals (3) vollständig verschlossen ist, sowie wenigstens eine geöffnete Position, in der ein vorbestimmter Durchlaßquerschnitt im Bereich des Düsenhalses (3) definiert wird, und ist **dadurch gekennzeichnet, daß** die Vorrichtung zum selektiven Verschließen ein achsensymmetrisches Verschlußorgan (1), das stromabwärts des Düsenhalses (3) angeordnet ist, eine axiale Stange (7) zum Betätigen des Verschlußorgans (1), ein erstes Organ zur Kurzzentrierung (6) der Betätigungsstange (7), das an dem stromaufwärtigen ersten Ende (51) der Brennkammer im Bereich der Treibstoffeinspritzvorrichtung (8) gelegen ist und einen Durchmesser D sowie eine axiale Kontaktbereichslänge L aufweist, ein zweites Organ zur Kurzzentrierung (4) der Betätigungsstange (7), das in der Brennkammer (5) in der Nähe des Düsenhalses (3) sowie stromaufwärts dessen gelegen ist und einen Durchmesser D und eine axiale Kontaktbereichslänge L aufweist, sowie ein System (2) zum Rückstellen in die Schließstellung der Betätigungsstange (7) der Vorrichtung zum selektiven Verschließen des Düsenhalses (3) umfaßt, wobei die Länge L des Kontaktbereichs und der Durchmesser D durch die Beziehung 0,1 D ≤ L ≤ 0,5 D verbunden sind.

2. Raketentriebwerk nach Anspruch 1, **dadurch gekennzeichnet, daß** die Länge des Kontaktbereichs und der Durchmesser D durch die Beziehung 0,1 D ≤ L ≤ 0,3 D verbunden sind.

3. Raketentriebwerk nach Anspruch 1 oder Anspruch 2, **dadurch gekennzeichnet, daß** das zweite Organ zur Kurzzentrierung (4) ein bewegliches Kreuz (141 bis 144) umfaßt, das mit der Betätigungsstange (7) fest verbunden ist.

4. Raketentriebwerk nach Anspruch 1 oder Anspruch 2, **dadurch gekennzeichnet, daß** das zweite Organ zur Kurzzentrierung (4) ein festes Kreuz (40) umfaßt, das mit der Brennkammer (5) fest verbunden und mit einem mittleren Loch (46) versehen ist, in dem die Betätigungsstange (7) verschiebbar angebracht ist.

5. Raketentriebwerk nach einem der Ansprüche 1 bis 4, **dadurch gekennzeichnet, daß** es eine hydraulische Betätigungsvorrichtung umfaßt, die durch den Treibstoff betätigt wird und auf ein stromaufwärtiges Ende (71) der Betätigungsstange (7) wirkt, um die Vorrichtung zum selektiven Verschließen des Düsenhalses (3) in der geöffneten Position zu blockieren.

6. Raketentriebwerk nach einem der Ansprüche 1 bis 5, **dadurch gekennzeichnet, daß** das System (2) zum Rückstellen in die Schließstellung der Betätigungsstange (7) eine tarierte Feder umfaßt.

7. Raketentriebwerk nach einem der Ansprüche 1 bis 6, **dadurch gekennzeichnet, daß** das erste Organ zur Kurzzentrierung (6) der Betätigungsstange (7) eine in die Treibstoffeinspritzvorrichtung (8) integrierte Manschette umfaßt.

8. Raketentriebwerk nach einem der Ansprüche 1 bis 7, **dadurch gekennzeichnet, daß** es eine Treibstoffeinspritzvorrichtung (8) ringförmiger Art umfaßt.

9. Raketentriebwerk nach einem der Ansprüche 1 bis 8, **dadurch gekennzeichnet, daß** das achsensymmetrische Verschlußorgan (1) eine Stachel- oder Spitzbogenform aufweist.

10. Raketentriebwerk nach einem der Ansprüche 1 bis 9, **dadurch gekennzeichnet, daß** das achsensymmetrische Verschlußorgan (1) aus \/erbundwerkstoff besteht.

11. Raketentriebwerk nach einem der Ansprüche 1 bis 10, **dadurch gekennzeichnet, daß** die Brennkammer (5) aus Verbundwerkstoff besteht.

12. Raketentriebwerk nach einem der Ansprüche 1 bis 11, **dadurch gekennzeichnet, daß** die Brennkammer (5) eine Schutzinnenbeschichtung (52) aufweist, die zwischen dem stromaufwärtigen ersten Ende (51) der Brennkammer (5) und dem Bereich angeordnet ist, in dem sich das zweite Organ zur Kurzzentrierung (4) der Betätigungsstange (7) befindet.

13. Raketentriebwerk nach einem der Ansprüche 1 bis 12, **dadurch gekennzeichnet, daß** die Betätigungsstange (7) der Vorrichtung zum selektiven Verschließen des Düsenhalses (3) automatisch das Öffnen der Vorrichtung zum selektiven Verschließen bewirkt, wenn der Druck in der Brennkammer (5) einen vorbestimmten Wert überschreitet.

14. Raketentriebwerk nach einem der Ansprüche 1 bis 13, **dadurch gekennzeichnet, daß** es ein wiederzündbares Antriebssystem mit variablem Schub bildet, das einen Mindestkammerdruck beim Zünden benötigt, und daß es Mittel umfaßt, um in der Wiederzündphase das Verschlußorgan (1) in die Position zum Verschließen des Düsenhalses (3) zu bringen.
